# EUROPEAN PATENT SPECIFICATION

(11) **EP 2 672 591 B1**
(45) Date of publication and mention of the grant of the patent: **10.01.2018**
(21) Application number: 12171301.0
(22) Date of filing: 08.06.2012
(51) Int. Cl.: H02B 11/24

(54) **Shutter device for an electrical switchgear panel, and related switchgear panel**
Verschlussvorrichtung für eine elektrische Schalttafel und zugehörige Schalttafel
Dispositif d'obturation pour panneau d'appareillage de commutation électrique et panneau d'appareillage de commutation associé

(43) Date of publication of application: 11.12.2013
(73) Proprietor: ABB Schweiz AG, 5400 Baden (CH)
(72) Inventor: Capelli, Fabio, 24030 Capizzone (BG) (IT); Carera, David, 24048 Treviolo (BG) (IT); Gemme, Carlo, 27100 Pavia (IT); Pellegrini, Fabio, 24128 Bergamo (IT)
(74) Representative: De Santis, Giovanni

(56) References cited:
- EP-A1- 1 962 397
- EP-A1- 2 405 545
- US-A- 1 797 936

## Description

The present invention relates to a shutter device for an electrical switchgear panel, and to a related switchgear panel using such a shutter device.

The use of switchgear panels is well known in the field of electrical distribution; from a structural point of view, known switchgear panels, which can be also indicated with the equivalent terms of electric switchboards, or simply switchgear or electric panels, or similar definitions, usually comprise a metallic cubicle that is internally divided into several compartments or cells housing various apparatuses and equipment. For example, one compartment houses a switching unit, such as a circuit breaker; a second compartment houses main connections, such as bus-bars, feeding power from an electrical source; a further compartment houses a system of cables suitable to be connected to a load, for example an electrical motor.

In particular, the circuit breaker is usually of the withdrawable or draw-out type, i.e. it is mounted on a truck and is movable between two operative positions, namely; a first position wherein the circuit breaker is connected in input and output to corresponding contact pieces associated with a source side (e.g. bus.-bars) and load side (e.g. other conductors or cables), respectively, of a circuit to which it is associated; and a second position wherein the circuit breaker is electrically disconnected (withdrawn position) from both the input and output contact pieces.

In order to ensure a suitable safety, a shutter device is usually associated with the circuit breaker. Such known shutter devices comprise one or more metallic or insulating components, e.g. panels, which are movable, through rather complicated mechanisms actuated following the movement of the truck, from a non-protective position, e.g. raised, where the contact pieces are accessible by the contacts of the circuit breaker, to a protective or segregating position, e.g. lowered, where they shield the contact pieces connected to the power source and the load and make them inaccessible to the contacts of the circuit breaker and to operators for their safety.

Although such known shutter devices perform quite satisfactorily, they still present some aspects which can be further improved. For example, the movement of the movable partitioning walls or shutter panels is actuated through complex and cumbersome mechanisms which most of the times are adapted "ad hoc" for the specific application. In addition, such movement is dependent on the stroke, inside the switchgear, of the circuit breaker and related truck on which it is mounted. Examples of such prior art solutions are described in patent documents US1,797,936 and EP1962397 A1 wherein a shutter is actuated by the movement of a circuit breaker moving inside a switchgear.

These issues are even more important when executing retrofitting or maintenance operations on already installed switchgear. For example, the installed circuit breaker needs to be replaced by a functionally equivalent device once reaching its end of life, which may last several years.

Such replacements entail some problems, either because the circuit breaker to be replaced is very old and therefore not produced any more by the original manufacturer, or because the user wishes to use circuit breakers from different manufacturers.

Hence, a problem of compatibility may arise between the new circuit breaker to be used and the structural and/or functional characteristics of the existing switchgear panel into which the new circuit breaker has to be installed. For example, the distance between the pre-existing contact pieces of the electric circuit may be totally different and unsuitable with respect to the distance of the corresponding input and output connection contacts of the circuit breaker.

One rather expensive solution adopted to face this issue is to replace the entire switchgear panel instead of retrofitting it by simply replacing only the circuit breaker.

Another solution foresees to replace the old circuit breaker with a new one modified case by case in order to customize it with the specific existing switchgear panel; or in alternative, to modify the existing switchgear panel in order to adapt it to the new circuit breaker under installation.

As a consequence, also the entire shutter device and related actuating mechanism has to be replaced or the new circuit breaker has to be customized to fit and operate the shutter device and related actuating mechanism in the existing switchgear panel to perform the safety function required.

Clearly, such a customized approach requires an extensive use of qualified resources and faces practical problems; for example, it is needed to design an ad-hoc solution for each retrofit intervention and to know very well the specific dimensions and functionalities of the original circuit breaker and/or related panel.

Hence, there is a desire to solve at least some of the above indicated issues; such a desire is fulfilled by a shutter device for an electric switchgear panel, characterized in that it comprises:
- a base suitable to be placed on a bearing surface inside said switchgear panel, said base being adapted to support, positioned thereon, a current switching device movable between a connected position wherein the switching device is electrically connected to an associated electrical circuit and a disconnected position wherein the switching device is electrically separated from the corresponding electrical circuit;
- a frame having at least a portion which rises up transversally from said base and delimits a through aperture;
- a movable shutter operatively associated with said base and said frame; and
- an actuating mechanism adapted to move said shutter between a first position where the shutter closes at least partially said through aperture preventing the electrical connection of said current switching device with said electrical circuit and a second position wherein the shutter is retracted and leaves said through aperture at least partially opened for allowing the electrical connection of said current switching device with said electrical circuit, wherein said actuating mechanism is adapted to move said movable shutter from said first position to said second position while the current switching device is kept motionless on said base.

Further characteristics and advantages will emerge from the description of preferred, but not exclusive embodiments of a shutter device according to the present disclosure, non-limiting examples of which are provided in the attached drawings, wherein:
figure 1 is a perspective view showing a shutter device according to the present disclosure, in a first closed position;
figure 2 is a perspective view showing a shutter device according to the present disclosure, in a second open position;

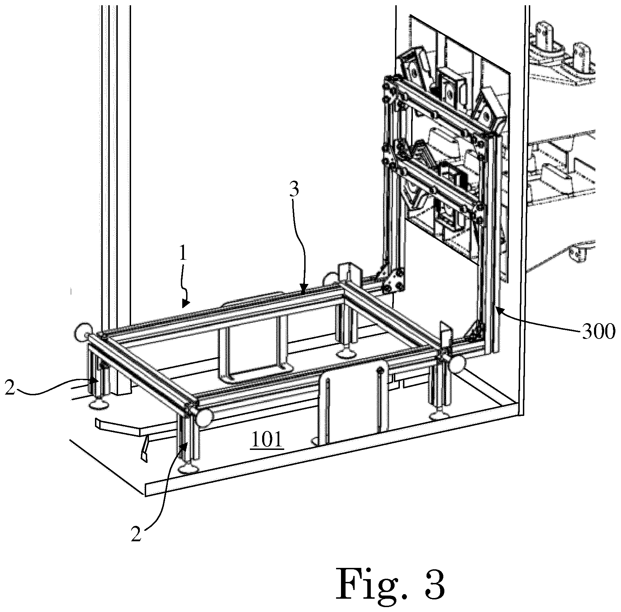

figures 3 and 4 are perspective views illustrating, separately, some components of the shutter device of figures 1 and 2;
figure 5 is a perspective view illustrating some components of an actuating mechanism used in the shutter device according to the present invention;
figure 6 is a perspective view showing some of the components of figure 5 seen from a bottom view;
figure 7 is an exploded view of some components illustrated in figures 5 and 6; figure 8 shows an earthing device used in the shutter device according to the present disclosure; figure 9 shows an elastically deformable element used in the earthing device of figure 8.

In the attached figures, a shutter device according to the present disclosure is indicated by the overall reference number 100.

The shutter device 100 is suitable to be used in a switchgear panel 200 which comprises, according to well-known solutions, a cubicle or cabinet 201 having a plurality of walls which all together define an inside volume; for the sake of clarity of illustration, in the attached figures some walls of the cabinet 201 have been removed in order to better show the internal parts thereof.

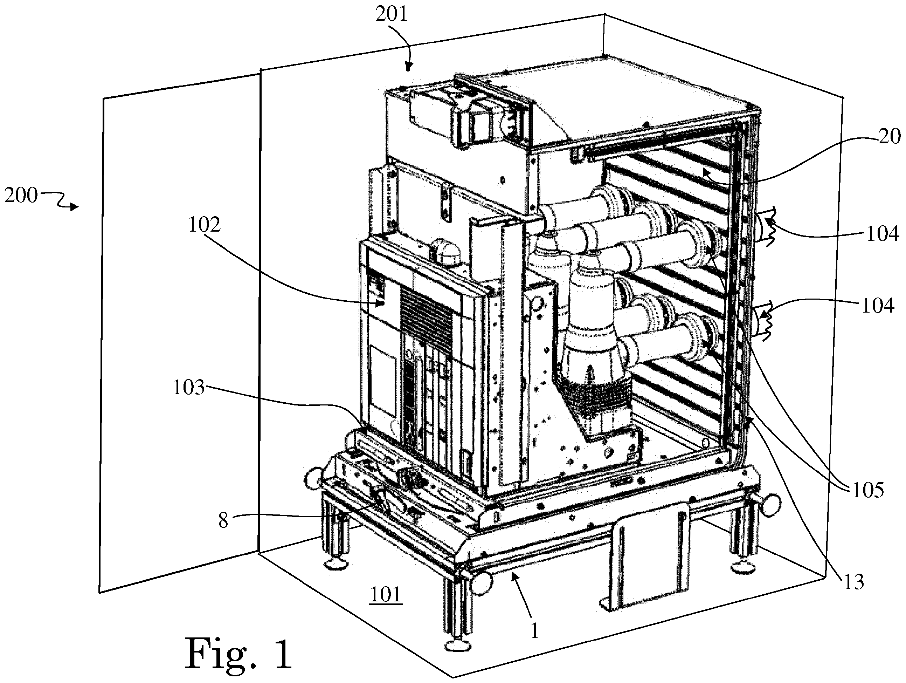

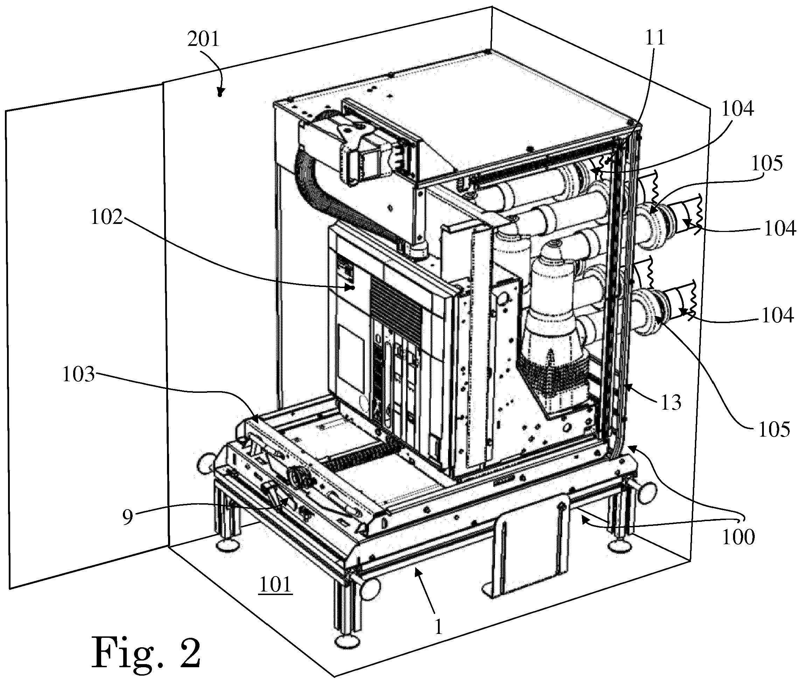

The inside volume of the cabinet 201 is usually divided into one or more compartments suitable to accommodate various electrical or electronic equipment and/or devices; in particular, one compartment is devoted to accommodate a current switching device 102, an example of which is illustrated in figures 1 and 2.

In the exemplary embodiment illustrated in figures 1 and 2, the current switching device 102 comprises a three-phase medium voltage circuit breaker which is mounted, on a truck 103, movable, and in particular sliding, between: a connected position (figure 2) wherein the switching device 102 is electrically connected to an associated electrical circuit 104; and a disconnected or withdrawn position (figure 1) wherein the switching device 102 is electrically separated from the corresponding electrical circuit 104.

The electrical circuit 104 is schematically represented in figures 1 and 2 by two sets of contacts 104 which are electrically connected for example, to a power source (upper set of contacts) and a load (lower set of contacts), respectively.

Clearly, the current switching device 102 can comprise different types and/or combination of current making or breaking switching devices, e.g. contactors with or without fuses, SF6 or vacuum circuit breakers, et cetera.

The shutter device 100 comprises: a base 1 which suitable to be placed, inside the switchgear panel, on a bearing surface 101, e.g. the floor of the cabinet 201, and is adapted to support, positioned thereon, the current switching device 102 with its associated truck 103; a frame 10 having at least a portion which rises up transversally, e.g. substantially vertically, from the base 1 and delimits a through aperture 11; a movable shutter 20 which is operatively associated with the base 1 and the frame 10; and an actuating mechanism, indicated in the figures by the overall reference number 30, which is adapted to move the shutter 20 between a first position, illustrated in figure 1, where the shutter 20 closes at least partially, preferably completely, the through aperture 11 thus preventing the electrical connection of the current switching device 102 with the electrical circuit 104 and providing protection for personnel safety, and a second position, illustrated in figure 2, wherein the shutter 20 is retracted and leaves the through aperture 11 at least partially opened, preferably completely opened for allowing the electrical connection of the current switching device 102 and its contacts (e.g. finger cluster) 105 with the electrical circuit 104.

Advantageously, in the shutter device 100 according to the present disclosure, the actuating mechanism 30 is adapted to move the movable shutter 20 independently from the movement of the current switching device 102.

In particular, the actuating mechanism 30 is adapted to move the movable shutter 20 from the first closed position towards the second open position while the current switching device 102 (and also the truck 103 connected therewith) is kept motionless, i.e. substantially still, on the base 1; more in detail, the actuating mechanism 30 comprises means for locking the shutter 20 in the first closed position up to when the switching device 102 is positioned on the base 1 in a predefined position.

Preferably, the base 1 comprises means 2 for adjusting its positioning relative to the bearing surface 101; in this way, once the current switching device 102 is positioned on the base 1, it is possible to adjust the positioning of the current switching device 102, and in particular of its connection contacts 105, relative to the position of the contact pieces 104 to which it has to be electrically connected.

More in detail, in the exemplary embodiment illustrated, the base 1 comprises a plurality of adjustable feet 2 suitable to rest on the bearing surface 101 and on which there is mounted a placing frame 3. A basement 4, having for example a plurality of side walls 5 and a placing plate 6 for placing on it the truck 103 and the switching device 102, is securely connected, e.g. screwed, onto the placing frame 3. In the embodiment illustrated, there are illustrated two lateral guide rails 7 for the truck 103.

In turn, the frame 10 comprises a couple of rails each having one portion 12 positioned under the placing plate 6 along a corresponding side wall 5, and a second portion 13 which raises up substantially vertically from the placing plate 6 up to a certain desired height. The two rails are mounted for example, along their portions 13, on supporting side walls 70 which are connected by a transversal bar 71, while the first portion 12 can be connected, e.g. screwed to the corresponding side walls 5. Such rails can be formed for example by profiled metallic elements, and the frame 10 in practice constitutes a guide for the shutter 20.

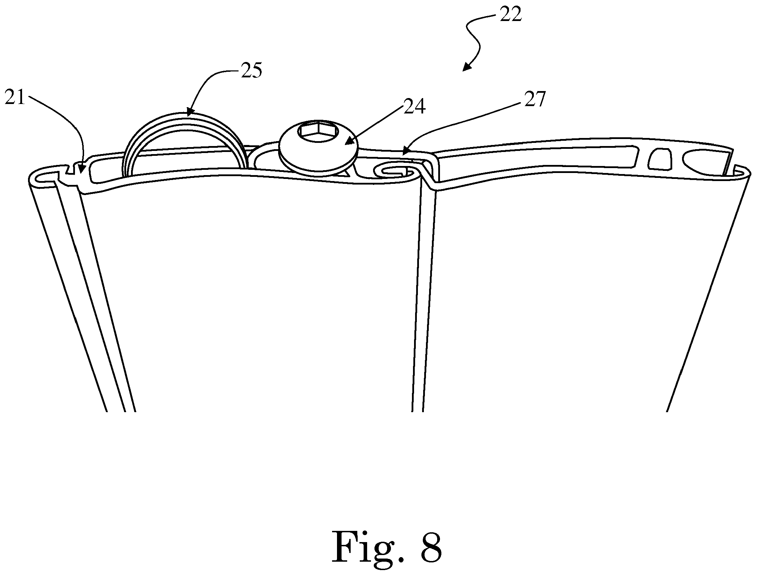

Preferably, the shutter 20 has a modular structure, i.e. it comprises a plurality of separate and substantially identical (or very similar) modules 21, which are connected to each other. In the embodiment illustrated, as for instance visible in figure 8, such modules 21 have each a hollow body, e.g. bar-shaped; a certain number of modules 21 can be cut and assembled together so as to have the desired size (in terms of width and total length) and are mechanically connected to each other with their side ends inserted into the respective rails. The bars forming the modules 21 are for example made of metal, for instance aluminum which can be coated with electrically insulating paint or oxidized with an insulating layer.

Preferably, the shutter device 100 according to the present disclosure further comprises an earthing device 22 for connecting to ground potential the shutter device itself; in particular in the embodiment illustrated, the earthing device 22 is operatively connected to the shutter 20.

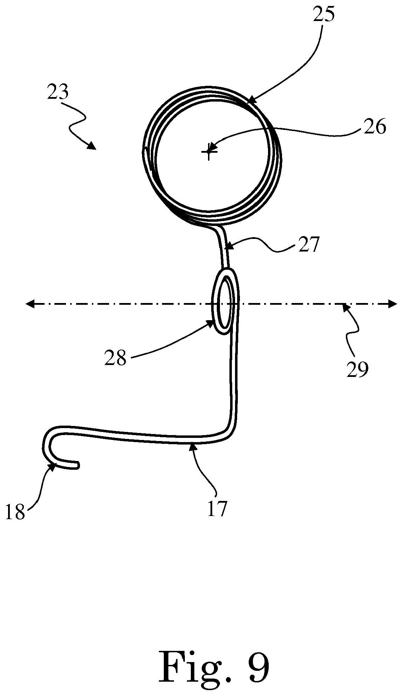

For instance, as illustrated in figures 8 and 9, the earthing device 22 comprises an elastically deformable element 23, e.g. a contoured spring which is partially inserted inside one or more of the modules 21 and is securely connected therewith by means of fixing means 24, e.g. a self-screwing screw 24. As illustrated in figure 9, the contoured spring 23 comprises: a first part 25 having one or more turns wound around an axis 26; a second part 27 departing from the first part 25 and forming one or more turns 28 wound around an axis 29 substantially perpendicular to the axis 26; and a third part 17, extending transversally from the second part 27, which ends with a hook-shaped portion 18.

In practice, as shown in figure 8, the contoured spring 23 is inserted inside one the module 21 with the portion 25 partially protruding out; the hook-shaped end 18 is hooked inside an adjacent module 21, and the turn 28 receives, passing there through, a self-screwing screw 24.

The self-screwing screw 24, when installed, mechanically fixes the spring 23 to the shutter 20 and, while screwing, removes the insulating coat of layer thus realizing electrical contact between the shutter 20 and the spring 23. When the shutter 20 is installed with the ends of the modules 21 inserted into the guide rails 12-13, the portion 25 makes contacts with the rails itself, and therefore, allows connecting to ground potential the entire shutter device 100.

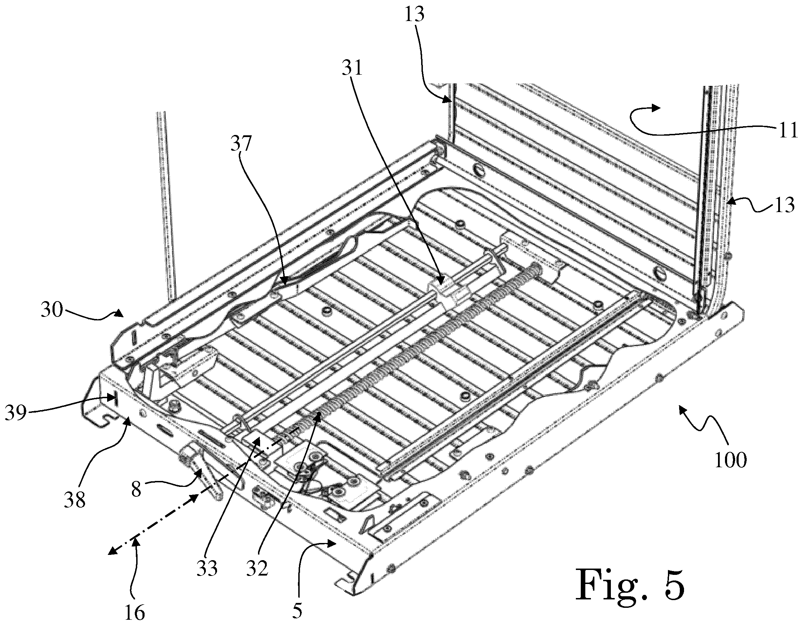

As illustrated in figures 5-7, the actuating mechanism 30 comprises a docking element 31 suitable to interact with an associated portion of the switching device 102, and in particular of the truck 103, so as to block the current switch device 102 motionless in its disconnected (withdrawn) position when the movable shutter 20 is moved from the first closed position up to the second open position.

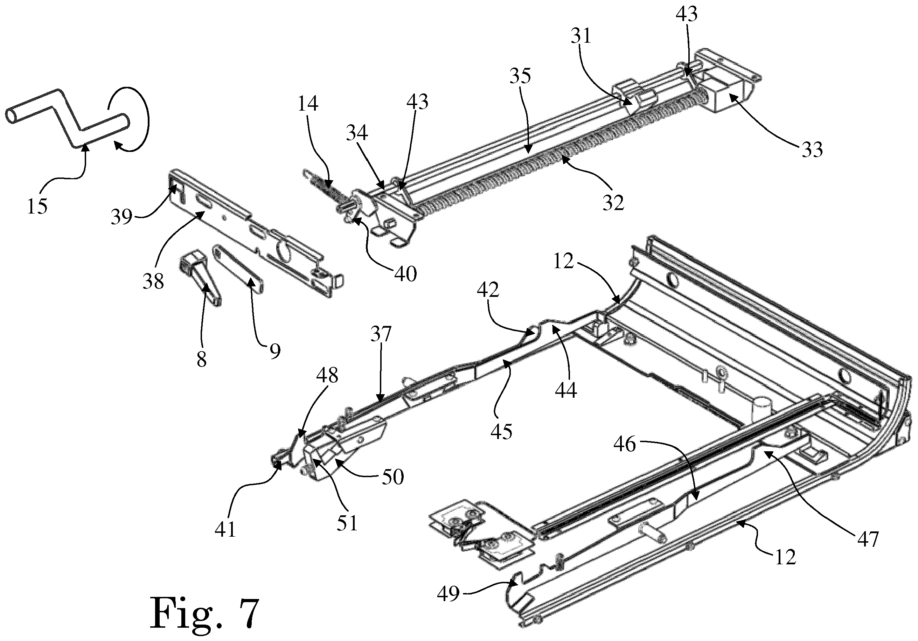

The actuating mechanism 30 also comprises a worm screw 32 which is operatively connected to the shutter 20 and is mechanically connected to the base 1, e.g. to the front and back side walls 5 of the basement 4; the worm screw 32 is suitable to be actuated, namely rotated, by a tool, e.g. the tool 15 schematically represented in figure 7, so as to cause movement of the shutter 20 between the first and second positions. In particular, an actuating block 33 is mounted on the worm screw 32; the actuating block 33 is connected to the shutter 20 and moves along the rotating axis 16 of the worm screw 32 so as to drag/push the shutter 20 between the first and second positions when the worm screw 32 is under actuation.

The actuating mechanism 30 further comprises a first rod 34, e.g. square-shaped, which is pivotally connected to the base 1, for instance to the front and back side walls 5 of the basement 4, and a second rod 35 which is connected to the first rod 34, e.g. by means of two end wings 43, and rotates solidly with it between a raised position and a lowered position.

The docking element 31 is mounted on at least the second rod 35 and rotates solidly with it between the raised and lowered position. In the embodiment illustrated, the docking element 31 is mounted on both the first rod 34 and the second rod 35 and rotates solidly with them.

As illustrated, the first rod 34 and the second rod 35 are positioned along a side of and are substantially parallel to the worm screw 32 such that the actuating block 33, when dragging the shutter 20 between the first and second positions, acts on the second rod 35 and keeps it in the raised position along a portion of its dragging path. In this way the docking element 31 is kept raised and blocks the switching device 102 motionless in its disconnected (withdrawn) position when the movable shutter 20 is moved from the first closed position to the second open position; more in particular, the second rod 35 has a length shorter than the worm screw 32 and the first rod 34, such that the actuating block 33, after dragging the shutter 20 either at a first position or at the second position and reaching the respective end-stroke position (see figures 5 and 7), disengages from and allows the second rod 35 to rotate (together with the first rod 34) from the raised position to the lowered position. Accordingly, also the docking element 31 lowers down and is disengaged from the switching device 102, which is now free to move from the disconnected (withdrawn) position the connected position. When the switching device 102 is in the connected position or in an intermediate position but not exactly in the end stroke disconnected position, the docking element 31 cannot rotate in the raised position since it interferes with the truck 103 (or directly with a portion of the switching device 102) thus blocking the rotation of the first rod 34 and second rod 35, as well as of an handle 8 and an obstruction lever 9. Such condition realizes the interlock with the switching device that enables access to operate the worm screw 32 and therefore to move the shutter 20 from its end stroke position only if the docking element 31 is free to rotate, i.e. only when the switching device 102 is exactly in the desired disconnected position.

A flap 36 is also mounted on the first rod 34 and rotates solidly with; in practice the flap 36 is movable between: a first position where it crosses the placing plate 6 and hinders the introduction of an actuation tool (for example similar to the tool 15) devised to cause movement of the switching device 102 on its truck 103, in particular towards the electrically connected position; and a second position where the movable flap 36 is lowered and the introduction of the actuation tool is permitted.

In turn, the locking means of the actuating mechanism 30 comprise: a front bar 38 having a slot 39, e.g. sliding along the front wall 5 of the basement 4; the handle 8 and the obstruction lever 9 which are on the front part of the front bar 38; a returning lever 40 operatively associated with the front bar 38, and subject to the returning action of an associated spring 14.

The returning lever 40 is movable between a locked position where it impedes to actuate the handle 8 and a freed position where the handle 8 can be actuated by a user.

Further, a locking lever 37 is positioned on a side of and under the placing plate 6; in the embodiment illustrated the locking lever 37 comprises: a locking portion 41 suitable to enter into the slot 39 so as to lock the movable front bar 38 and the returning lever 40 up to when the switching device 102 is positioned on the base 1 in a predefined position; and an unlocking protrusion 42, raising up from the base 1, and in particular passing through the placing plate 6, which is suitable to mechanically interact with a corresponding portion of the switching device 102, and in particular of the truck 103 so as to disengage the locking portion 41 from the slot 39 and allow movement of the front bar 38 and of the returning lever 40 when the switching device 102 has reached the predefined disconnected position. Basically, the locking lever 37 prevents from operating the shutter 20 from its end stroke closed position if a switching device 102 is not inserted, thus preventing opening of the shutter 20 and access to the electrical circuit 104, ensuring protection for personnel safety.

The locking means also comprise at least one end-stroke block 44 positioned along the base 1 at the predefined disconnected position for the switching device 102 preventing movement of the switching device 102 towards its connected position if the shutter 20 has not reached its end stroke position, as for example illustrated in figure 5.

In particular, in the embodiment illustrated, there are provided two side levers 45 and 46. The first side lever 45 is positioned, under the placing plate 6, close to the locking lever 37 and runs parallel to it; the first side lever 45 comprises the end-stroke block 44 which emerges through the placing plate 6. The second side lever 46 is also positioned under the placing plate 6 and runs parallel to one side wall 5 of the basement 4, and comprises a further end-stroke block 47 passing through the placing plate 6. Further, both side levers 45 and 46 present each a corresponding block 48, 49 positioned at the front side of the base 1. Finally, in the embodiment illustrated, there could be a further blocking element 51, represented in figure 7 as part of an elbow shaped lever 50, which is also positioned under the pacing plate 6 and has the portion 51 protruding through the placing plate 6. The blocks 48, 49 and 51 contribute to keep the switching device 102 and related truck 103 placed on the placing plate 6 until the actuation of the shutter 20 is completed and the aperture 11 is definitely closed. In practice, the flap 36 in its first position hinders the extraction from the placing plate 6 of the switching device 102 while the shutter 20 is under operation until the blocks 48, 49 and 51 get into locking position.

In practice, once the shutter device 100 has been installed in a cabinet 201, the base 1 can be regulated by means of the adjustable feet 2 so as to bring the base at the desired position. Such operation can be executed with the help of one or more dimes and/or position jigs 300.

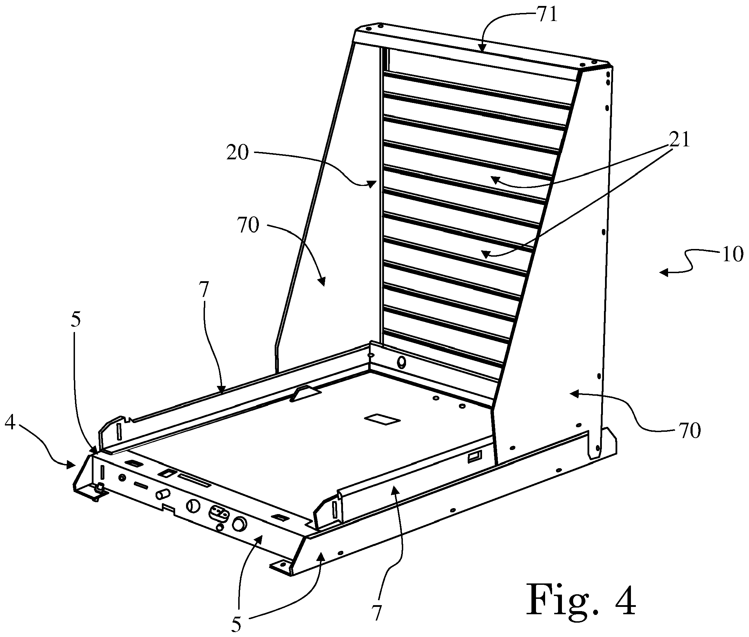

Then, starting for example from a condition of shutter device 100 fully closed, e.g. the shutter 20 fully closes the aperture 11, as for example illustrated in figure 4, a truck 103 with the switching device 102 can be positioned on the placing plate 6 with the blocks 48, 49, 51 being lowered. The actuating mechanism 30 as a whole is blocked by the locking lever 37 and in particular by the locking protrusion 41 engaged into the slot 39. When the switching device 102 reaches the predefined disconnected position (see for example figure 1) on the placing plate 6, i.e. when arriving at the block(s) 44(47), the truck 103 or part of the switching device 102 itself pushes down the unlocking protrusion 42 which in turn causes the locking protrusion 41 to disengage from the slot 39. Accordingly, the returning lever 40 and the front bar 38 can slide laterally and free the actuation of the handle 8; a user can therefore rotates the handle 8 and the obstruction lever 9 moves as well; thus access to the worm screw 32 is allowed for the tool 15. In this way, also the first rod 34 and the second rod 35 rotate thus bringing the docking element 31 to raise and block the truck 103 and switching device 102 in the predefined disconnected position. By using the tool 15 and rotating the worm screw 32, the actuating block 33 drags the shutter 20 towards the front and during this movement keeps the second rod 35 in the raised position with the docking element 31 always engaged with a lower part of the truck 103 (or of the switching device 102). When the actuating block 33 reaches the end stroke position, illustrated for example in figure 5, the shutter 20 fully opens the aperture 11 which means that there is a continuous and free space for the connection contacts 105 within the frame 10 to mate with the corresponding contacts 104. Further, when the actuating block 33 reaches this end stroke position, it is disengaged from the second rod 35 which therefore can rotate together with the first rod 34 and disengages the docking element 31 from the truck 103 or the switching device 102.

Further, the blocks 48, 49, 51 are raised and impede removal of the switching device 102 from the placing plate 6, thus preventing access to the electrical circuit 104 and ensuring adequate protection for personnel safety (see e.g. figure 2). In addition, the blocks 44, 467 are lowered and stop blocking the movement of the switching device 102 from the disconnected position towards the connected one.

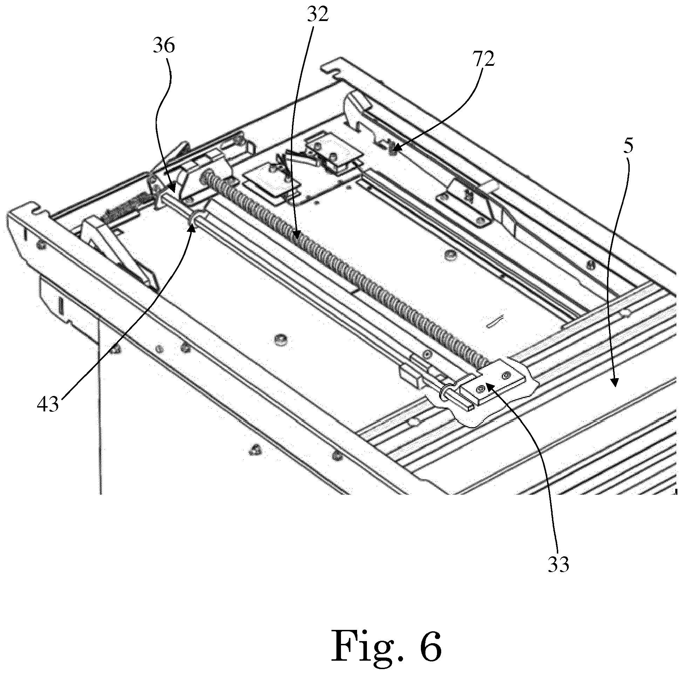

The flap 36 rotates solidly with the first rod 34 and gives free access for a tool, like the tool 15; in practice, according to solutions well known in the art, the truck 103 comprises an actuation mechanism with a worm screw for actuating the switching device 102. Hence, in this condition, a user can rotate the worm screw of the truck 103 thus moving the current switching device 102 until the connection contacts 105 mate with the contact pieces 104 as shown in figure 2. When the current switching device 102 has to be removed, a user can again rotate the worm screw of the truck 103 until the current switching device reaches the end stroke front position as for example illustrated in figure 1. In this position the blocks 48, and/or 49, and/or 51, block the truck and prevent it and the switching device 102 mounted thereon from being removed until the shutter 20 fully closes the aperture 11. Hence a user has to rotate the handle 8 thus rotating the first rod 34 and the second rod 35 which again bring the docking element 31 to block the truck 103 (and hence the switching device 102 in the actual disconnected position). Then the user rotates the worm screw 32 in the opposite direction; accordingly, the actuating block 33 moves along the axis 16 towards the back part and during this movement keeps the second rod 35 raised with the docking block 31 engaged with the truck 103. When the actuating block 33 reaches its opposite end stroke, as for example illustrated in figure 6, the shutter 20 closes completely the aperture 11.

In this position the actuating block 33 disengages from the second rod 35; hence the second rod 35 and the first rod 34 can rotate thus disengaging the docking element 31 and returning to the lowered position. The spring 14 recalls the lever 40 which in turn brings the front bar 38 to re-engage with the locking protrusion 41. The blocks 48, and or 49 and /or 51 are unlocked and lowered by one or more associated recalling springs 72 on levers 45, 46 and on actuating elements 73 placed for example on the first module of the shutter 20, and the truck 103 together with the switching device 102 can be safely removed, if needed.

In practice, it has been found that the shutter device 100 according to the present disclosure gives some significant improvements over known devices according to a solution which is modular, adjustable, quite simple and compact; indeed, it is possible to easily size the shutter device according to the specific applications, where many components, if not even all, can be standardized and may be produced in series, or require very minor size modifications in order to be used. Further, the fact that the shutter 20 completely closes the through aperture 11, makes withdrawing operations very safe, while the fact that the aperture 11, and in particular the access space between the connection contacts 105 of the switching device 102 and the corresponding circuit contacts 104 is fully open and free from obstacles renders operations easier and dielectric design safer. What's more, the opening/closing of the shutter 20 is totally independent from and does not need any movement of the current switching device 102 (or of the related truck 103), thus allowing to realize a shutter device with a very compact overall dimensions and usable in panels having a limited depth.

As a matter of fact, the shutter device 100 according to the present disclosure is suitable to be used in principle, in any suitable switchgear panel, and is particularly advantageous for retrofitting exiting switchgear panels.

Therefore, the present disclosure also relates to a switchgear panel 200 comprising a cabinet 201, and characterized in that it comprises a shutter device 100 as defined in the relevant appended claims and before described, which is positioned inside the cabinet 201.

The shutter device thus conceived is susceptible of modifications and variations, all of which are within the scope of the inventive concept including any combination of the above described embodiments which have to be considered as encompassed by the above description; all details may further be replaced with other technically equivalent elements. For example, the various components of the actuating mechanism may be differently shaped, provided they are suitable for the scope they were conceived, or differently positioned and or differently mutually associated. For example, in figure 4 the frame 10 is shown provided with the two lateral plates 70 which can be omitted or modified to from a closed cassette solution; the earthing elastic element 23 can be formed by a different element other than the depicted spring, or even the spring itself can have a different shape; et cetera. In practice, the materials, so long as they are compatible with the specific use, as well as the individual components, may be any according to the requirements and the state of the art.

## Claims

1. A shutter device (100) for an electric switchgear panel, comprising:
- a base (1) suitable to be placed on a bearing surface (101) inside said switchgear panel, said base (1) being adapted to support, positioned thereon, a current switching device (102) movable between a connected position wherein the switching device (102) is electrically connected to an associated electrical circuit (104) and a disconnected position wherein the switching device (102) is electrically separated from the corresponding electrical circuit (104);
- a frame (10) having at least a portion which rises up transversally from said base (1) and delimits a through aperture (11);
- a movable shutter (20) operatively associated with said base (1) and said frame (10); and
- an actuating mechanism (30) adapted to move said shutter (20) between a first position where the shutter (20) closes at least partially said through aperture (11) preventing the electrical connection of said current switching device (102) with said electrical circuit (104) and a second position wherein the shutter (20) is retracted and leaves said through aperture (11) at least partially opened for allowing the electrical connection of said current switching device (102) with said electrical circuit (104), **characterized in that** said actuating mechanism (30) is adapted to move said movable shutter (20) from said first position to said second position while the current switching device (102) is kept motionless on said base (1).

2. The shutter device (100) according to claim 1, **characterized in that** said actuating mechanism (30) comprises means for locking said shutter (20) in the first position up to when the switching device (102) is positioned on said base (1) in a predefined position.

3. The shutter device (100) according to one or more of the previous claims, **characterized in that** said actuating mechanism (30) comprises a docking element (31) suitable to interact with an associated portion of the switching device (102) or of a truck (103) on which said switching device is mounted and block it motionless when the movable shutter (20) is moved from said first position to said second position.

4. The shutter device (100) according to one or more of the previous claims, **characterized in that** said actuating mechanism (30) comprises a worm screw (32) which is operatively connected to said shutter (20) and to said base (1), said worm screw (32) being suitable to be actuated by a tool so as to cause movement of said shutter (20) between said first and second positions, and an actuating block (33) which is operatively coupled to said worm screw (32), said actuating block (33) being connected to said shutter (20) so as to drag the shutter (20) between said first and second positions when the worm screw (32) is under actuation.

5. The shutter device (100) according to one or more of the preceding claims, wherein said actuating mechanism (30) further comprises a first rod (34) pivotally connected to said base (1), and a second rod (35) which is connected to said first rod (34) and rotates solidly with it between a raised position and a lowered position.

6. The shutter device (100) according to claim 5 wherein said first rod (34) and said second rod (35) are positioned along a side of and substantially parallel to said worm screw (32) such that said actuating block (33), when dragging said shutter (20) between said first and second positions, acts on said second rod (35) and keeps it in the raised position along a portion of its dragging path.

7. The shutter device (100) according to claim 6, wherein said second rod (35) has a length shorter than said worm screw (32) such that said actuating block (33), when reaching an end-stroke position after dragging the shutter (20) between said first and second positions, disengages from and allows said second rod (35) rotating from the raised position to the lowered position.

8. The shutter device (100) according to one or more of claims 5 to 7, wherein said docking element (31) is mounted on at least said second rod (35) and moves solidly with it between a raised position in which it blocks the switching device (102) motionless when the movable shutter (20) is moved from said first position to said second position and a lowered position where the docking element (31) is disengaged from the switching device (102).

9. The shutter device (100) according to claim 8, wherein said docking element (31) is mounted on at least said second rod (35) and moves solidly with it in such a way that its movement towards the raised position is impeded when the switching device (102) is in a position different from said predefined position.

10. The shutter device (100) according to claim 8 wherein the actuating mechanism (30) further comprises a flap (36) which is mounted on said first rod (34) and moves solidly with it between a first position suitable to hinder the introduction of an actuation tool devised to cause movement of the switching device (102) and/or of its truck (103) and a second position where the introduction of said actuation tool is permitted.

11. The shutter device (100) according to one or more of the preceding claims wherein said locking means comprise a movable front bar (38) having a slot (39), a cam lever operatively associated with said front bar (38), and a locking lever (37) which comprises a locking portion (41) suitable to enter into said slot (39) so as to lock said movable front bar (38) and prevent said cam lever (40) and the front bar (38) to move from a locked position up to when the switching device (102) is positioned on said base (1) in a predefined position.

12. The shutter device (100) according to claim 11, wherein said locking lever (37) comprises an unlocking protrusion (42) suitable to interact with a corresponding portion of said switching device (102) or of a truck (103) on which it is mounted so as to disengage said locking portion (41) from said slot (39) and allow movement of said front bar (38) and of said cam lever (40) from said locked position towards a freed position when the switching device (102) has reached said predefined position.

13. The shutter device (100) according to one or more of the previous claims, **characterized in that** it comprises a handle (8) and an obstructing lever (9) operatively connected to said first rod (34) and said front bar (38).

14. The shutter device (100) according to one or more of the previous claims, **characterized in that** said locking means comprise at least one end-stroke block (45) positioned along said base (1) at said predefined positioned for said switching device (102).

15. The shutter device (100) according to one or more of the previous claims, wherein said base (1) comprises means (2) for adjusting its positioning relative to said bearing surface (101).

16. The shutter device (100) according to one or more of the previous claims, **characterized in that** said movable shutter (20) has a modular structure.

17. The shutter device (100) according to claim 16, **characterized in that** said movable shutter (20) comprises a plurality of hollow bars (21) connected to each other.

18. The shutter device (100) according to one or more of the previous claims, **characterized in that** it comprises an earthing device (22) for connecting to ground the shutter device itself, wherein said earthing device (22) comprises an elastically deformable element (23) which is partially inserted inside one or more of said plurality of modules (21) and is securely connected therewith by means of fixing means (24).

19. An electrical switchgear panel (200) comprising a cabinet (201), **characterized in that** it comprises a shutter device (100) according to one or more of the preceding claims which is positioned inside said cabinet.

## Patentansprüche

1. Verschlussvorrichtung (100) für ein elektrisches Schaltanlagenelement, aufweisend:
- eine Basis (1), die auf einer Lagerfläche (101) in dem Schaltanlagenelement platzierbar ist, wobei die Basis (1) derart ausgestaltet ist, dass sie eine darauf positionierte Stromschaltvorrichtung (102) lagert, die zwischen einer verbundenen Position, in welcher die Schaltvorrichtung (102) elektrisch mit einem dazugehörigen elektrischen Schaltkreis (104) verbunden ist, und einer getrennten Position, in welcher die Schaltvorrichtung (102) elektrisch von dem korrespondierenden elektrischen Schaltkreis (104) getrennt ist, bewegbar ist;
- einen Rahmen (10), der zumindest einen Abschnitt aufweist, der schräg von der Basis (1) aufragt, und eine Durchgangsöffnung (11) begrenzt;
- einen beweglichen Verschluss (20), der mit der Basis (1) und dem Rahmen (10) operativ verbunden ist; sowie
- einen Antriebsmechanismus (30), der ausgestaltet ist, um den Verschluss (20) zwischen einer ersten Position, in welcher der Verschluss (20) die Durchgangsöffnung (11) zumindest teilweise verschließt, wodurch die elektrische Verbindung der Stromschaltvorrichtung (102) mit dem elektrischen Schaltkreis (104) verhindert wird, und einer zweiten Position zu bewegen, in welcher der Verschluss (20) zurückgezogen ist und die Durchgangsöffnung (11) zumindest teilweise offen lässt, wodurch die elektrische Verbindung der Stromschaltvorrichtung (102) mit dem elektrischen Schaltkreis (104) zugelassen wird,
**dadurch gekennzeichnet, dass**
der Antriebsmechanismus (30) ausgestaltet ist, um den beweglichen Verschluss (20) aus der ersten Position in die zweite Position zu bewegen, während die Stromschaltvorrichtung (102) bewegungslos auf der Basis (1) gehalten ist.

2. Verschlussvorrichtung (100) nach Anspruch 1, **dadurch gekennzeichnet, dass** der Antriebsmechanismus (30) eine Einrichtung aufweist, um den Verschluss (20) in der ersten Position zu verriegeln, bis die Schaltvorrichtung (102) in einer vordefinierten Position auf der Basis (1) angeordnet ist.

3. Verschlussvorrichtung (100) nach einem oder mehreren der vorstehenden Ansprüche, **dadurch gekennzeichnet, dass** der Antriebsmechanismus (30) ein Andockelement (31) aufweist, das mit einem dazugehörigen Abschnitt der Schaltvorrichtung (102) oder eines Gestells (103), auf dem die Schaltvorrichtung montiert ist, interagieren kann und diese bewegungslos arretiert, wenn der bewegliche Verschluss (20) von der ersten Position in die zweite Position bewegt wird.

4. Verschlussvorrichtung (100) nach einem oder mehreren der vorstehenden Ansprüche, **dadurch gekennzeichnet, dass** der Antriebsmechanismus (30) eine Schneckenschraube (32) aufweist, die operativ mit dem Verschluss (20) und der Basis (1) verbunden ist, wobei die Schneckenschraube (32) vermittels eines Werkzeugs antreibbar ist, um eine Bewegung des Verschlusses (20) zwischen der ersten und der zweiten Position zu verursachen, sowie einen Antriebsblock (33), der operativ mit der Schneckenschraube (32) verbunden ist, wobei der Antriebsblock (33) mit dem Verschluss (20) verbunden ist, um den Verschluss (20) zwischen der ersten und zweiten Position zu ziehen, wenn die Schneckenschraube (32) angetrieben wird.

5. Verschlussvorrichtung (100) nach einem oder mehreren der vorstehenden Ansprüche, wobei der Antriebsmechanismus (30) ferner eine erste Stange (34) aufweist, die drehbar mit der Basis (1) verbunden ist, sowie eine zweite Stange (35), die mit der ersten Stange (34) verbunden ist und mit dieser zwischen einer erhöhten Position und einer abgesenkten Position dreht.

6. Verschlussvorrichtung (100) nach Anspruch 5, wobei die erste Stange (34) und die zweite Stange (35) entlang einer Seite und im Wesentlichen parallel zu der Schneckenschraube (32) angeordnet sind, so dass der Antriebsblock (33), wenn er den Verschluss (20) zwischen der ersten und zweiten Position zieht, auf die zweiten Stange (35) wirkt und diese entlang eines Abschnitts des Schleppwegs in der erhöhten Position hält.

7. Verschlussvorrichtung (100) nach Anspruch 6, wobei die zweite Stange (35) eine Länge aufweist, die kürzer ist als die Schneckenschraube (32), so dass sich der Antriebsblock (33), wenn er nach dem Ziehen des Verschlusses (20) zwischen der ersten und zweiten Position eine Endhubstellung erreicht, von der zweiten Stange (35) löst und zulässt, dass sich diese aus der erhöhten Position in die abgesenkte Position dreht.

8. Verschlussvorrichtung (100) nach einem oder mehreren der Ansprüche 5 bis 7, wobei das Andockelement (31) zumindest an der zweiten Stange (35) montiert ist und sich mit dieser zwischen einer erhöhten Position, in welcher es die Schaltvorrichtung (102) bewegungslos arretiert, wenn der bewegliche Verschluss (20) von der ersten Position in die zweite Position bewegt wird, und einer abgesenkten Position bewegt, in welcher das Andockelement (31) von der Schaltvorrichtung (102) gelöst ist.

9. Verschlussvorrichtung (100) nach Anspruch 8, wobei das Andockelement (31) zumindest an der zweiten Stange (35) montiert ist und sich mit dieser bewegt, so dass deren Bewegung in Richtung zur erhöhten Position verhindert wird, wenn die Schaltvorrichtung (102) sich an einer anderen Position als der vordefinierten Position befindet.

10. Verschlussvorrichtung (100) nach Anspruch 8, wobei der Antriebsmechanismus (30) ferner eine Klappe (36) aufweist, die an der ersten Stange (34) montiert ist und sich mit dieser zwischen einer ersten Position, die ein Einführen eines Antriebswerkzeugs verhindern kann, das ausgestaltet ist, um die Bewegung der Schaltvorrichtung (102) und/oder des Gestells (103) zu verursachen, und einer zweiten Position bewegen kann, die das Einführen zulässt.

11. Verschlussvorrichtung (100) nach einem oder mehreren der vorstehenden Ansprüche, wobei die Verriegelungseinrichtung eine bewegliche vordere Schiene (38) mit einem Schlitz (39), einen Kurvenhebel, der mit der vorderen Schiene (38) operativ verbunden ist, sowie einen Sicherungshebel (37) aufweist, der einen Verriegelungsabschnitt (41) hat, der in den Schlitz (39) einbringbar ist, um die bewegliche vordere Schiene (38) zu verriegeln und zu verhindern, dass sich der Kurvenhebel (40) und die vordere Schiene (38) aus der verriegelten Position bewegen, bis die Schaltvorrichtung (102) in einer vordefinierten Position auf der Basis (1) angeordnet ist.

12. Verschlussvorrichtung (100) nach Anspruch 11, wobei der Sicherungshebel (37) einen Entriegelungsvorsprung (42) aufweist, der mit einem korrespondierenden Abschnitt der Schaltvorrichtung (102) oder des Gestells (103), auf welchem diese montiert ist, interagieren kann, um den Verriegelungsabschnitt (41) aus dem Schlitz (39) zu lösen und eine Bewegung der vorderen Schiene (38) und des Kurvenhebels (40) aus der verriegelten Position hin zu einer freien Position zu ermöglichen, wenn die Schaltvorrichtung (102) die vordefinierte Position erreicht hat.

13. Verschlussvorrichtung (100) nach einem oder mehreren der vorstehenden Ansprüche, **dadurch gekennzeichnet, dass** sie einen Griff (8) sowie einen Sperrhebel (9) aufweist, die operativ mit der ersten Stange (34) und der vorderen Schiene (38) verbunden sind.

14. Verschlussvorrichtung (100) nach einem oder mehreren der vorstehenden Ansprüche, **dadurch gekennzeichnet, dass** die Verriegelungseinrichtung zumindest einen Endhubblock (45) aufweist, der entlang der Basis (1) an der vordefinierten Position für die Schaltvorrichtung (102) angeordnet ist.

15. Verschlussvorrichtung (100) nach einem oder mehreren der vorstehenden Ansprüche, wobei die Basis (1) eine Einrichtung (2) aufweist, um deren Position relativ zur Lagerfläche (101) einzustellen.

16. Verschlussvorrichtung (100) nach einem oder mehreren der vorstehenden Ansprüche, **dadurch gekennzeichnet, dass** der bewegliche Verschluss (20) modular aufgebaut ist.

17. Verschlussvorrichtung (100) nach Anspruch 16, **dadurch gekennzeichnet, dass** der bewegliche Verschluss (20) eine Mehrzahl hohler Lamellen (21) umfasst, die miteinander verbunden sind.

18. Verschlussvorrichtung (100) nach einem oder mehreren der vorstehenden Ansprüche, **dadurch gekennzeichnet, dass** diese eine Erdungsvorrichtung (22) aufweist, um die Verschlussvorrichtung zu erden, wobei die Erdungsvorrichtung (22) ein elastisch verformbares Element (23) aufweist, das teilweise in eine oder mehrere der Lamellen (21) eingesetzt ist und mittels eines Befestigungsmittels (24) sicher damit verbunden ist.

19. Elektrisches Schaltanlagenelement (200) mit einem Schrank (201), **dadurch gekennzeichnet, dass** es eine Verschlussvorrichtung (100) nach einem oder mehreren der vorstehenden Ansprüche aufweist, die in dem Schrank angeordnet ist.

## Revendications

1. Dispositif d'obturation (100) pour un panneau d'appareillage de commutation électrique, comprenant :
- une base (1) adaptée pour être placée sur une surface d'appui (101) à l'intérieur dudit panneau d'appareillage de commutation, ladite base (1) étant adaptée pour supporter, tout en étant positionné sur celle-ci, un dispositif de commutation de courant (102) mobile entre une position reliée dans laquelle le dispositif de commutation (102) est relié électriquement à un circuit électrique associé (104) et une position déconnectée dans laquelle le dispositif de commutation (102) est séparé électriquement du circuit électrique correspondant (104) ;
- un cadre (10) ayant au moins une partie qui s'élève transversalement à partir de ladite base (1) et délimite une ouverture traversante (11) ;
- un obturateur mobile (20) associé de manière fonctionnelle à ladite base (1) et audit cadre (10) ; et
- un mécanisme d'actionnement (30) adapté pour déplacer ledit obturateur (20) entre une première position où l'obturateur (20) ferme au moins partiellement ladite ouverture traversante (11) empêchant la liaison électrique entre ledit dispositif de commutation de courant (102) et ledit circuit électrique (104) et une deuxième position dans laquelle l'obturateur (20) est rétracté et laisse ladite ouverture traversante (11) au moins partiellement ouverte pour permettre la liaison électrique entre ledit dispositif de commutation de courant (102) et ledit circuit électrique (104), **caractérisé en ce que** ledit mécanisme d'actionnement (30) est adapté pour déplacer ledit obturateur mobile (20) de ladite première position à ladite deuxième position tandis que le dispositif de commutation de courant (102) est maintenu immobile sur ladite base (1).

2. Dispositif d'obturation (100) selon la revendication 1, **caractérisé en ce que** ledit mécanisme d'actionnement (30) comprend des moyens pour verrouiller ledit obturateur (20) dans la première position jusqu'au moment où le dispositif de commutation (102) est positionné sur ladite base (1) dans une position prédéfinie.

3. Dispositif d'obturation (100) selon une ou plusieurs des revendications précédentes, **caractérisé en ce que** ledit mécanisme d'actionnement (30) comprend un élément de connexion (31) adapté pour interagir avec une partie associée du dispositif de commutation (102) ou d'un chariot (103) sur lequel ledit dispositif de commutation est monté et pour le bloquer immobile lorsque l'obturateur mobile (20) est déplacé de ladite première position vers ladite deuxième position.

4. Dispositif d'obturation (100) selon une ou plusieurs des revendications précédentes, **caractérisé en ce que** ledit mécanisme d'actionnement (30) comprend une vis sans fin (32) qui est reliée de manière fonctionnelle audit obturateur (20) et à ladite base (1), ladite vis sans fin (32) étant adaptée pour être actionnée par un outil de manière à provoquer le mouvement dudit obturateur (20) entre lesdites première et deuxième positions, et un bloc d'actionnement (33) qui est couplé de manière fonctionnelle à ladite vis sans fin (32), ledit bloc d'actionnement (33) étant relié audit obturateur (20) de manière à traîner l'obturateur (20) entre lesdites première et deuxième positions lorsque la vis sans fin (32) est en cours d'actionnement.

5. Dispositif d'obturation (100) selon une ou plusieurs des revendications précédentes, dans lequel ledit mécanisme d'actionnement (30) comprend en outre une première tige (34) reliée à pivotement à ladite base (1) et une deuxième tige (35) qui est reliée à ladite première tige (34) et tourne solidement avec elle entre une position élevée et une position abaissée.

6. Dispositif d'obturation (100) selon la revendication 5 dans lequel ladite première tige (34) et ladite deuxième tige (35) sont positionnées le long d'un côté de ladite vis sans fin (32) et essentiellement en parallèle à celle-ci de sorte que ledit bloc d'actionnement (33), en traînant ledit obturateur (20) entre lesdites première et deuxième positions, agisse sur ladite deuxième tige (35) et la maintienne dans la position élevée le long d'une partie de son trajet de traînée.

7. Dispositif d'obturation (100) selon la revendication 6, dans lequel ladite deuxième tige (35) a une longueur plus courte que celle de ladite vis sans fin (32) de sorte que ledit bloc d'actionnement (33), lorsqu'il atteint une position de fin de course après avoir traîné l'obturateur (20) entre lesdites première et deuxième positions, se libère de ladite deuxième tige (35) et lui permet de tourner de la position élevée à la position abaissée.

8. Dispositif d'obturation (100) selon une ou plusieurs des revendications 5 à 7, dans lequel ledit élément de connexion (31) est monté sur au moins ladite deuxième tige (35) et se déplace solidement avec elle entre une position élevée dans laquelle il bloque le dispositif de commutation (102) immobile lorsque l'obturateur mobile (20) est déplacé de ladite première position à ladite deuxième position et une position abaissée où l'élément de connexion (31) est libéré du dispositif de commutation (102).

9. Dispositif d'obturation (100) selon la revendication 8, dans lequel ledit élément de connexion (31) est monté sur au moins ladite deuxième tige (35) et se déplace solidement avec elle de manière à ce que son mouvement vers la position élevée soit entravé lorsque le dispositif de commutation (102) est dans une position différente de ladite position prédéfinie.

10. Dispositif d'obturation (100) selon la revendication 8 dans lequel le mécanisme d'actionnement (30) comprend en outre un volet (36) qui est monté sur ladite première tige (34) et se déplace solidement avec elle entre une première position adaptée pour empêcher l'introduction d'un outil d'actionnement conçu pour provoquer le mouvement du dispositif de commutation (102) et/ou de son chariot (103) et une deuxième position où l'introduction dudit outil d'actionnement est autorisée.

11. Dispositif d'obturation (100) selon une ou plusieurs des revendications précédentes, dans lequel lesdits moyens de verrouillage comprennent une barre avant mobile (38) ayant une fente (39), un levier à came associé de manière fonctionnelle à ladite barre avant (38), et un levier de verrouillage (37) qui comprend une partie de verrouillage (41) adaptée pour entrer dans ladite fente (39) de manière à verrouiller ladite barre avant mobile (38) et empêcher ledit levier à came (40) et la barre avant (38) de se déplacer depuis une position verrouillée jusqu'au moment où le dispositif de commutation (102) soit positionné sur ladite base (1) dans une position prédéfinie.

12. Dispositif d'obturation (100) selon la revendication 11, dans lequel ledit levier de verrouillage (37) comprend une protubérance de déverrouillage (42) adaptée pour interagir avec une partie correspondante dudit dispositif de commutation (102) ou d'un chariot (103) sur lequel il est monté de manière à libérer ladite partie de verrouillage (41) de ladite fente (39) et permettre le mouvement de ladite barre avant (38) et dudit levier à came (40) de ladite position verrouillée vers une position libérée lorsque le dispositif de commutation (102) a atteint ladite position prédéfinie.

13. Dispositif d'obturation (100) selon une ou plusieurs des revendications précédentes, **caractérisé en ce qu'**il comprend une poignée (8) et un levier d'obstruction (9) reliés de manière fonctionnelle à ladite première tige (34) et à ladite barre avant (38).

14. Dispositif d'obturation (100) selon une ou plusieurs des revendications précédentes, **caractérisé en ce que** lesdits moyens de verrouillage comprennent au moins un bloc de fin de course (45) positionné le long de ladite base (1) à ladite position prédéfinie pour ledit dispositif de commutation (102).

15. Dispositif d'obturation (100) selon une ou plusieurs des revendications précédentes, dans lequel ladite base (1) comprend des moyens (2) pour régler son positionnement par rapport à ladite surface d'appui (101).

16. Dispositif d'obturation (100) selon une ou plusieurs des revendications précédentes, **caractérisé en ce que** ledit obturateur mobile (20) a une structure modulaire.

17. Dispositif d'obturation (100) selon la revendication 16, **caractérisé en ce que** ledit obturateur mobile (20) comprend une pluralité de barres creuses (21) reliées entre elles.

18. Dispositif d'obturation (100) selon une ou plusieurs des revendications précédentes, **caractérisé en ce qu'**il comprend un dispositif de mise à la terre (22) pour relier à la terre le dispositif d'obturation lui-même, où ledit dispositif de mise à la terre (22) comprend un élément élastiquement déformable (23) qui est partiellement inséré à l'intérieur d'un ou de plusieurs de ladite pluralité de modules (21) et y est solidement relié par l'intermédiaire de moyens de fixation (24).

19. Panneau d'appareillage de commutation électrique (200) comprenant une armoire (201), **caractérisé en ce qu'**il comprend un dispositif d'obturation (100) selon une ou plusieurs des revendications précédentes qui est positionné à l'intérieur de ladite armoire.
